# EUROPEAN PATENT SPECIFICATION

(11) **EP 2 913 975 B1**
(45) Date of publication and mention of the grant of the patent: **09.04.2025**
(21) Application number: 15154148.9
(22) Date of filing: 06.02.2015
(51) Int. Cl.: H04L 9/40, G06F 21/44, H04N 21/4627, G07F 7/12, H04W 12/069, G07F 19/00, G06Q 20/18, G06Q 20/38, G06Q 20/36, G06F 21/10, G06F 21/62, G07F 7/10

(54) **End-to-end device authentication**
Ende-zu-Ende-Vorrichtungsauthentifizierung
Authentification de dispositif de bout en bout

(30) Priority: 28.02.2014 US 201414193967
(43) Date of publication of application: 02.09.2015
(73) Proprietor: Cardtronics USA, Inc., Atlanta, GA 30308 (US)
(72) Inventor: Han, Richard, Lundie Tayside DD2 5NW (GB); Harrow, Charles, Dundee Tayside DD5 3LR (GB); Monaghan, Andrew, Dundee Tayside DD1 4LF (GB)
(74) Representative: Secerna LLP

(56) References cited:
- US-A1- 2010 145 852
- US-B1- 7 159 114
- US-B1- 7 309 004
- "Handbook of Applied Cryptography", 1997, CRC PRESS LLC, USA, article MENEZES ET AL, pages: 321 - 424, XP055210495

## Description

Increasingly consumers are conducting financial transactions through Self-Service Terminals (SSTs) without the assistance of a clerk. In fact, in many cases these transactions are conducted without any individual in the vicinity of the SSTs; other than, perhaps, a security camera integrated into the SSTs or in proximity to the SSTs.

The most common SST transaction occurs by a customer at an Automated Teller Machine (ATM). Contrary to what the general public believes, ATMs can be compromised and in some ways in a manner that takes advantage of inherent security holes of existing ATMs.

For example, in a typical ATM transaction a customer inserts a bank card, and enters their PIN (personal identification number) into an encrypting PINpad. Software on the ATM receives that encrypted information, which the ATM software cannot decrypt and sends it to an appropriate backend financial system for authentication together with the customer's account number and a withdrawal amount requested. If the PIN is correct and there are sufficient funds then the financial system returns an authentication. Next, the ATM core sends a dispense command to a dispenser in the ATM and the dispenser dispenses the currency amount associated with the withdrawal.

In the above scenario, if the ATM software can be replaced, modified, or bypassed then the amount for withdrawal sent to the dispenser can be changed or can be repeated multiple times; thereby depleting the ATM of all its currency. This is of particular concern to the owners and operators of the ATMs because the financial system tied to a transaction may only honor the initial authorized amount for withdrawal, leaving the ATM owner and operator with no recourse to recoup the stolen funds.

In various embodiments, end-to-end device authentication is presented.

According to an embodiment, a token and a dispense command that are issued from a host are obtained. Then, the token and the dispense command are validated before the dispense command is performed.

According to a first aspect of the present invention there is provided a method of operating a dispenser device to validate a dispense command, the method comprising: obtaining a token and a dispense command that are issued from a host; and validating the token and the dispense command before processing the dispense command.

The dispense command may be issued directly by the host, or it may be issued by an application, a service provider, or a device driver, in response to a dispense command issued by the host.

The token may be issued by the host to a driver-level component (such as a service provider or driver) rather than to an application-level component (such as an application).

According to a second aspect of the present invention there is provided a self-service terminal (SST) comprising: an application executing on a controller of the SST and operable to interact with a remote host; and a dispenser coupled to the SST controller and operable to (i) receive from the application a dispense command including a dispense amount, (ii) receive an authorization token issued by the host device, (iii) validate the authorization token, and (iv) dispense the dispense amount when the authorization token is validated.

According to a third aspect of the present invention there is provided a method comprising: obtaining, by a device, a token and a dispense command that are issued from a host; and validating, by the device, the token and the dispense command before processing the dispense command.

The dispense command may be issued directly by the host, or it may be issued by an application in response to a dispense command issued by the host.

Obtaining a token and a dispense command optionally further includes receiving the token and the dispense command directly from a self-service terminal (SST) core that the device is coupled to.

Receiving the token and the dispense command optionally further includes providing a nonce to the SST core for delivery to the host before obtaining the token, the nonce being used by the host in generating the token.

Validating the token and the dispense command optionally further includes independently reproducing a version of the token and comparing the reproduced version with the obtained token to determine whether a match occurs, the match indicating that the token and the dispense command are valid and indicating that the dispense command is to be processed.

Independently reproducing the token optionally further includes using, in a secure microprocessor of the device, a key shared with the host to reproduce the token, where the secure microprocessor is only accessible to the device.

Independently reproducing the token optionally further includes processing a message authentication code function on the secure microprocessor using: the shared key, a nonce provided to the host, and a dispense amount associated with the dispense command in reproducing the version.

Optionally, validating further includes sending an error message to an SST core to indicate that the token and the dispense command are not valid.

Optionally, validating further includes activating a currency dispensing mechanism to dispense a currency amount associated with the dispense command when the token and the dispense command are validated.

According to a fourth aspect of the present invention there is provided a method, comprising: receiving, by a host device, a dispense amount from a self-service terminal application; obtaining, by the host device, an authorization token by using a shared key and the dispense amount, the shared key shared between one of: the host device and a dispenser coupled to a controller in the SST and an external system and the dispenser; and sending, by the host device, the authorization token and the dispense amount back to the SST application for delivery to the dispenser for validation.

Optionally, receiving further includes receiving a nonce from the SST controller with the dispense amount, the nonce being provided to the SST controller from the dispenser.

Optionally, obtaining further includes using the nonce with the shared key and the dispense amount to generate the authorization token on the host device.

Optionally, using further includes providing the nonce, the shared key, and the dispense amount to a Method Authentication Code (MAC) function to generate the authorization token.

Optionally, providing further includes obtaining a truncated MAC message as a result from processing the MAC function, the truncated MAC message is the authorization token.

Optionally, obtaining further includes requesting the external system to provide the authorization token on behalf of the host device.

The method optionally further comprises periodically exchanging, by the host device, a new shared key with the dispenser through the SST controller, wherein the new shared key is encrypted with a public key of the dispenser and signed with a private key of the host device before sending an encrypted version of the new shared key to the SST controller for delivery to dispenser.

Optionally, periodically exchanging further includes determining a period for exchange of the new shared key based on evaluation of a policy.

Optionally, periodically exchanging further includes determining a period for exchange of the new shared key based on each new transaction at the SST.

Optionally, periodically exchanging further includes receiving an encrypted new shared key from the external system and sending the encrypted new shared key to the SST controller for delivery to the dispenser.

According to a fifth aspect of the present invention there is provided a self-service terminal comprising: an application operable to: (i) execute on the SST, (ii) interact with a dispenser, and (iii) interact with a remote host; and the dispenser operable to (i) couple to the SST, (ii) receiving from the application a dispense command including a dispense amount, (ii) receive an authorization token from the application and issued by the host device, (iii) validate the authorization token, and (iv) dispense the dispense amount when the authorization token is validated.

The dispenser is optionally further operable to (v) periodically exchange an encrypted shared key with the host device through the SST controller, wherein the SST controller is unable to decrypt the encrypted shared key.

The dispenser is optionally further operable to validate the authorization token by reproducing a version of the authorization token using the decrypted shared key.

According to a sixth aspect of the present invention there is provided a dispenser operable to (i) receive a dispense command including a dispense amount, (ii) receive an authorization token issued by a remote host, (iii) validate the authorization token, and (iv) dispense the dispense amount only when the authorization token is validated.

These and other aspects of the present invention will become apparent from the following specific description, given by way of example, with reference to the accompanying drawings, in which:
FIG. 1 is a diagram for practicing end-to-end device authentication using an Automated Teller Machine (ATM), according to an example embodiment;
FIG. 2 is a diagram of a method for end-to-end device authentication, according to an example embodiment;
FIG. 3 is a diagram of another method for end-to-end device authentication, according to an example embodiment;
FIG. 4 is a diagram of an end-to-end device authentication Self-Service Terminal (SST), according to an example embodiment; and
FIG. 5 is a diagram for practicing end-to-end device authentication using an Automated Teller Machine (ATM), according to an example embodiment.

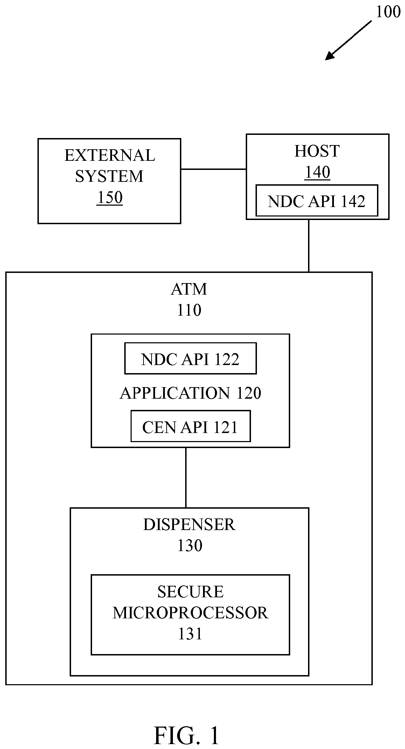

Reference is first made to FIG. 1, which is a diagram 100 for practicing end-to-end device authentication using an Automated Teller Machine (ATM) 110, according to an example embodiment. The various components are illustrated and the arrangement of the components is presented for purposes of illustration only. It is to be noted that other arrangements with more or less components are possible without departing from the onsite automated customer assistance teachings presented herein and below.

As used herein, end-to-end device authentication includes the concept that a device that fulfills a transaction is able to validate that the system that authenticated the transaction has sent the transaction command and that the transaction command has not already been fulfilled by that device.

The ATM, techniques, methods, and Self-Service Terminal (SST) that are presented herein and below for end-to-end device authentication can be implemented in whole or in part in one, all, or some combination of the components shown in diagram 100. The techniques and methods are programmed as executable instructions in memory and/or non-transitory computer-readable storage media and processed on one or more processors associated with the various components.

The discussion of the diagram 100 is within the context of transaction at an ATM 110. It is noted that the diagram 100 is also applicable to any enterprise providing Self-Service Terminals (SSTs). Thus, the description that follows below is but one embodiment of the invention and it not intended to limit the invention to only financial transactions on the ATM 110.

The example diagram 100 includes an ATM 110, a host 140, and an external financial system 150. The ATM 110 includes an application 120 and a dispenser 130. The dispenser 130 includes a secure microprocessor 131.

The ATM 110 is presented in greatly simplified form and is used to illustrate only those portions of components modified for purposes of achieving end-to-end device authentication from the dispenser 130 to the host 140, or, optionally, the external financial system 150.

The application 120 includes an Application Programming Interface (API) for interacting with the dispenser 130 (the device API 121) and an API for interacting with the host 140 (the host API 122). The device API 121 may comprise a conventional ATM device API such as the CEN XFS API. The host API 122 may comprise the NDC API (provided by NCR Corporation).

The application 120 also includes a forward-facing Graphical User Interface (GUI, not shown in FIG. 1) for interaction with a customer to enable the customer to perform a financial transaction at the ATM 110.

In this embodiment, the host 140 routes a transaction to the external system 150 for authentication. The external system 150 represents authentication systems for every major financial institution in a territory that allows its customers to perform ATM transactions. The external system 150 may comprise interchange networks or a financial institution switch. The host 140 communicates with the ATM 110 using an NDC API 142.

The dispenser 130 is integrated within the ATM 110 as an independent device (but also as a peripheral of an ATM core within the ATM 110). The coupling can be via a Universal Serial Bus (USB) port interface or other port interface. The dispenser 130 includes a conventional dispensing mechanism for dispensing currency to a customer. The dispensing mechanism is capable of counting the currency from available denominations and activating a shutter through which currency is dispensed (in either bunch form or sprayed out individually). The dispenser 130 is only accessible for interaction through the CEN API 121.

The dispenser 130 also includes a secure microprocessor 131, which is not accessible to any of the API calls made by the application 120. The secure microprocessor 131 houses cryptographic keys, certificates, and one or more cryptographic algorithms (functions). In some cases, the secure microprocessor 131 is pre-manufactured with the keys, certificates, and functions (that is, manufactured with the keys, certificates and functions preinstalled). In other embodiments, the keys, certificates, and functions can be installed on the secure microprocessor 131 by removing the dispenser 130 from the ATM 110 and interfacing the dispenser 130 to an independent secure device for installation and initial configuration.

The interaction of the components is now discussed with an example configuration and operational scenario. It is noted that other scenarios are possible without departing from the beneficial teachings provided herein.

Initially, the secure microprocessor 131 includes a root certificate (acting as its own certificate authority) that it can use to validate certificates issued from the certificate authority. The dispenser 130 (through the secure microprocessor 131) and the host 140 exchange certificates through the application 120 of the ATM 110. It is noted, that the original certificate of the host 140 can be acquired via an out-of-band process from the certificate authority (perhaps manufacturer of the dispenser 130). The certificate from the host 140 includes the host's public key and the certificate of the dispenser 130 includes the dispenser's public key. This exchanging of certificates is done once.

Next, the host 140 is configured to supply a shared key between the host 140 and the dispenser 130. The host 140 encrypts the shared key with the public key of the dispenser 130 (acquired from the dispenser's exchanged certificate) and then signs the encrypted shared key with the host's private key. As used here, a "private key" is never exposed on a network wire and remains under the exclusive secure control of the owner of that private key.

The host 140 sends the encrypted shared key to the dispenser 130 through the application 120. The application 120 cannot decrypt the encrypted shared key without the private key of the dispenser 130 and the public key of the host 140; but, the private key of the dispenser 130 is locked securely in the secure microprocessor 131. The application 120 forwards the encrypted shared key to the dispenser 130.

The dispenser 130 provides the secure microprocessor 131 the encrypted shared key. The secure microprocessor 131 decrypts the encrypted shared key and validates the signature of the host 140. The secure microprocessor 131 then locks the decrypted shared key in secure storage in the secure microprocessor 131.

The frequency of the exchange of the shared key between the host 140 and the dispenser 130 can be configured based on policy conditions. The frequency can range from one time only during initial configuration of the host 140 and the dispenser 130 or from each time a dispense command is sent to the dispenser 130 (transaction based).

It is also noted that in some embodiments the host 140 acts as a pass through (similar to the ATM application 120) such that the exchange of certificates (having the public keys and signed by the certificate authority) is between the dispenser 130 and the external financial system 150.

Once configuration has been completed, the ATM 110 is ready to provide secure end-to-end device authentication between an approving entity (host 140 or financial system 150) through to the dispenser 130. An example situation now follows for illustration.

A customer approaches the ATM 110 to withdraw some cash (currency or money). The GUI portion of the application 120 is active, inviting the customer to insert his/her bank card.

The customer indicates that a cash dispense transaction is required and indicates the amount (dispense amount). The encrypted customer PIN, the account number from the ATM card, and the identity of the customer's financial institution are held by the application 120 but not sent to the host 140 and the following enhanced processing occurs, which is different and improved over conventional processing. The information is held by the application 120 at this stage to avoid having to contact the host 140 twice for one transaction.

The application 120 sends the dispense amount (command with the amount or just the amount where the dispense command is implied by the amount) to the dispenser 130. The secure microprocessor 131 is sent the dispense amount and acquires a nonce. The dispense amount with the nonce or just the nonce is sent back from the dispenser 130 to the application 120. The dispenser 130 controls the generation of the nonce in the secure microprocessor 131 and it is transaction based (for each dispense command), such that a same transaction will have a different nonce; thus, a rogue application on the ATM 110 cannot replay a transaction because the nonce will change.

The application 120 sends the dispense amount and the nonce to the host 140 (along with the previous acquired encrypted PIN, account number, and an identifier for the appropriate external financial system 150, such that the host 140 is pinged or contacted once by the application 120 over the network).

In an embodiment, the description that follows for operations of the host 140 can be performed by the external financial system 150 with the host 140 acting as a pass through as the application 120 does with the dispenser 130.

The host 140 contacts the external financial system 150 in a conventional manner (the external financial system 150 may be an unmodified, conventional external financial system 150) with a transaction approval request and provides the account information, the encrypted PIN, and the requested amount of cash to be dispensed. The external financial system 150 approves the transaction approval request if the PIN is correct and the account has sufficient funds for the requested transaction.

If the external financial system 150 approves the transaction request, then the host 140 uses the shared key, the nonce, and the dispense amount as input to a Method Authentication Code (MAC) function. The output of the MAC function is a short truncated string of any value (truncated string is referred to as a MAC message). The dispense amount and the MAC message are then sent from the host 140 to the application 120 via the NDC API 122.

The application 120 forwards the dispense amount and the MAC message (which is referred to as a token) to the dispenser 130. The dispenser 130 provides the dispense amount and the MAC message to the secure microprocessor 131.

The secure microprocessor 131 passes the dispense amount, the shared key, and the nonce (that it generated for the dispense command (this transaction)) to a MAC function processing on the secure microprocessor 131. The MAC message generated by the secure microprocessor's MAC function is then compared with the MAC message (the token) received from the host 140 (through the application 120). If the dispenser's MAC message matches the host's supplied MAC message, then the dispenser 131 activates its dispensing mechanism to dispense the dispense amount. If the two MAC messages do not match, then the dispense command received from the application 120 is not processed; and, optionally, the dispenser 130 can send an error message back to the application 120 indicating that the dispense amount is not authorized because the token was not valid.

One now appreciates as authentication can be achieved by end devices that occurs through one (the ATM 110) or more (the host 140 when the external financial system 150 is used (as discussed above)) devices to another end device (the host 140 or the external financial system 150). This ensures verification during financial transactions, which has not been achievable to date in the financial industry.

It is noted that other arrangements and cryptology techniques can be used as well without departing from the teachings presented herein.

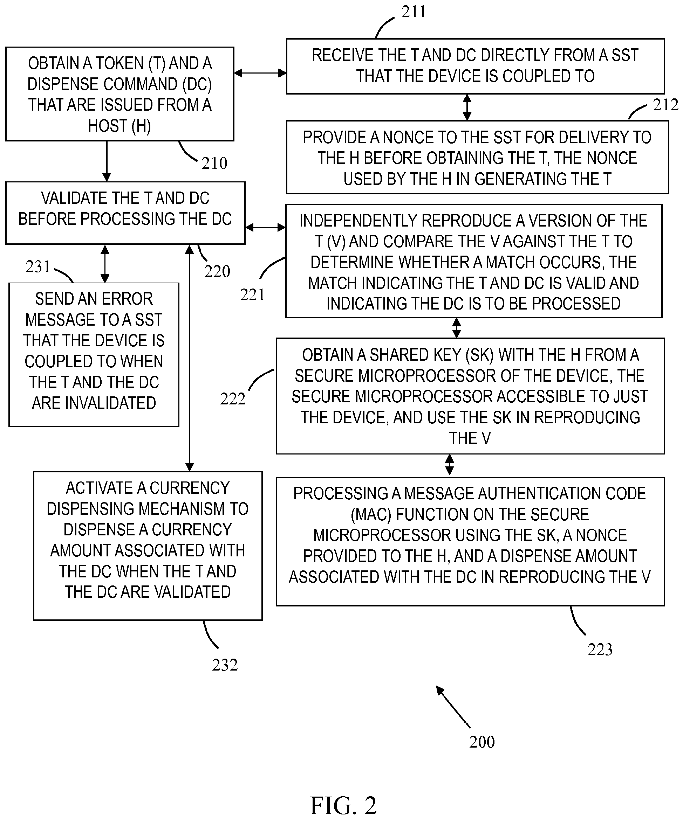

These (above-discussed) embodiments and other embodiments are now discussed with reference to the FIGS. 2-4.

FIG. 2 is a diagram of a method 200 for end-to-end device authentication, according to an example embodiment. The software module(s) that implements the method 200 is referred to as a "dispenser validator." The dispenser validator is implemented as executable instructions programmed and residing within secure memory and/or a non-transitory computer-readable (processor-readable) secure storage medium and executed by one or more secure processors of a device (in this embodiment, a dispenser device). The secure processor(s) of the device that executes the dispenser validator are specifically configured and programmed to process the dispenser validator. The dispenser validator has access to one or more networks during its processing. The networks can be wired, wireless, or a combination of wired and wireless.

In an embodiment, the device(s) that processes the dispenser validator is a dispenser device coupled to the ATM 110 of FIG. 1.

In another embodiment, the device that processes the dispenser validator is an integrated dispensing device associated with a kiosk other than an ATM. The integrated dispensing device can be coupled to the kiosk via a card slot, a Universal Serial Bus (USB) port, an Ethernet port, or other slot/port of the kiosk.

The perspective of the processing for the dispenser validator can be considered as being processing actions taken from an integrated or coupled device to an SST. The SST having a network connection to a host device, such as a server.

At 210, the dispenser validator obtains a token and a dispense command that are issued from a host. In an embodiment the host is the host 140 of the FIG. 1. In another embodiment, the host 140 performs a pass through of interactions to an external financial system 150 that performs the operations described herein for the host.

According to an embodiment, at 211, the dispenser validator receives the token and a dispense command (having a dispense amount or implied by the presence of a dispense amount) directly from a SST that the device that processes the dispenser validator is coupled to (hereinafter, the device that processes the dispenser validator is referred to as a "dispenser".)

In an embodiment of 211 and at 212, the dispenser validator provides a nonce to the SST core for delivery to the host before the token is provided by the host. The host uses the nonce with the dispense amount (or dispense command as discussed above) when producing or obtaining the token.

At 220, the dispenser validator validates the token and the dispense command before processing the dispense command.

In an embodiment of 220 and 212 at 221, the dispenser validator independently reproduces a version of the token and compares that version against the token to determine whether a match occurs. A successful match indicates the token and the dispense command are valid and indicates that the dispense command is to be processed by the dispenser validator to dispense the dispense amount associated with the dispense command.

In an embodiment of 221 and at 222, the dispenser validator obtains a shared key that is shared with the host from a secure microprocessor of the dispenser. The secure microprocessor is just accessible to the dispenser and not to the SST or any application processing on the SST. The dispenser validator uses the shared key in reproducing its own independent version of the host-supplied token.

In an embodiment of 222 and at 223, the dispenser validator processes a MAC function on the secure microprocessor using the shared key, the nonce provided by the dispenser validator to the host for the dispense command, and a dispense amount associated with the dispense command to reproduce the independent version of the MAC message.

According to an embodiment, at 231, the dispenser validator sends an error message to the SST (which the dispenser is coupled to) when the token and the dispense command were determined to be invalid or were invalidated by the dispenser validator.

In an embodiment, at 232, the dispenser validator activates a currency dispensing mechanism to dispense a currency amount associated with the dispense command when the token and the dispense command are validated.

It is noted that the dispenser validator can also authenticate the token by decrypting the token and/or verifying a signature of the host (external system) to perform validation; rather than, producing an independent version of the token as discussed above. Moreover, different cryptology approaches and cryptographic keys can be used for the secure cryptology encryption, decryption, and validation.

Also, the actual currency dispensed by the dispensing mechanism of the dispenser validator does not have to be currency in the form of bills. That is, in some embodiments, the dispensing mechanism provides a code written to electronic media and that code can be associated with a rebate, a discount, redemption of some good or service, gaming chips, gaming currency ticket, a virtual currency, perhaps, transmitted to a digital wallet, and the like.

The dispenser validator provides end-to-end device authentication (one end device being the dispenser and the other end device being the host (or external system when the host is acting as pass through)).

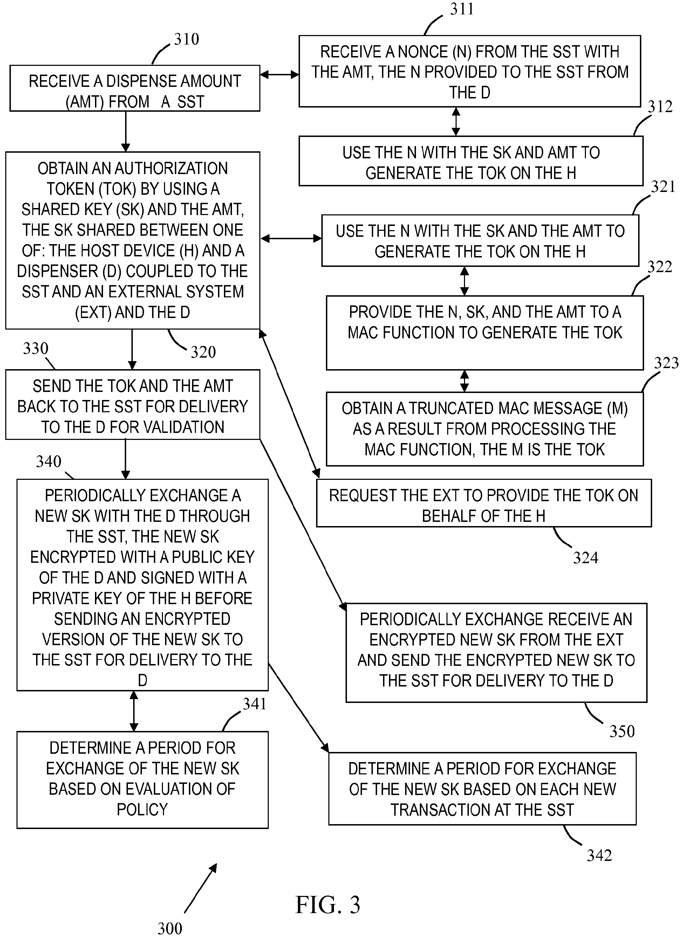

FIG. 3 is a diagram of another method 300 for end-to-end device authentication, according to an example embodiment. The software module(s) that implement the method 300 is referred to herein as a host validator. The host validator is implemented as executable instructions and programmed within memory and/or a non-transitory computer-readable (processor-readable) storage medium that executes on one or more processors of a server. The processors of the server are specifically configured to execute the host validator. The host validator can access one or more networks; the networks can be wired, wireless, or a combination of wired and wireless.

In an embodiment, the server that processes the host validator is host 140 of FIG. 1.

At 310, the host validator receives a dispense amount from a SST including a dispenser responsible for processing the dispense amount within the SST. The host validator is responsible for providing authentication of the dispense amount.

According to an embodiment, at 311, the host validator receives a nonce from the SST with the dispense amount. The nonce may be generated by the dispenser and provided to the SST core (a personal computer core to which various devices, such as the dispenser, are coupled as peripherals) for the dispense amount and a transaction occurring on the SST with a customer.

In an embodiment of 311 and at 312, the host validator uses the nonce with a shared key (shared between the host validator and the dispenser) along with the dispense amount to generate an authorization token.

At 320, the host validator obtains the authorization token by using a shared key and the dispense amount. Again, the shared key is shared between one of: the host and the dispenser or an external system and the dispenser.

In an embodiment of 320 and 313 at 321, the host validator uses the nonce with the shared key and the dispense amount to generate the token on the host.

In an embodiment of 321 and at 322, the host validator provides the nonce, the shared key, and the dispense amount to a MAC function to generate the authorization token.

In an embodiment of 322 and at 323, the host validator obtains a truncated MAC message as a result from processing the MAC function. The truncated MAC message is the authorization token.

According to an embodiment, at 324, the host validator requests the external system to provide the authorization token on behalf of the host.

At 330, the host validator sends the authorization token and the dispense amount back to the SST for delivery to the dispenser and for independent validation by the dispenser (end-to-end device authentication, one end device the host (or external system as discussed) and the other end device the dispenser).

In an embodiment, at 340, the host validator periodically exchanges a new shared key with the dispenser through the SST. The new shared key is encrypted with a public key of the dispenser and signed with a private key of the host before sending an encrypted version of the new shared key to the SST for delivery to the dispenser.

According to an embodiment of 340 and at 341, the host validator determines a period for exchange of the new shared key based on evaluation of a policy condition(s).

In an embodiment of 340 and at 342, the host validator determines a period for exchange of the new shared key based on each new transaction occurring at the SST with a customer.

In an embodiment, at 350, the host validator periodically receives an encrypted new shared key from the external system and sends the encrypted new shared key to the SST for delivery to the dispenser.

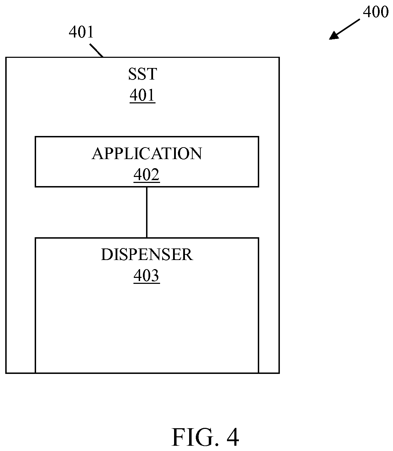

FIG. 4 is a diagram 400 of an end-to-end device authentication SST 401, according to an example embodiment. The components of the end-to-end device authentication SST 401 (herein after "SST 401") are programmed and reside within memory and/or a non-transitory computer-readable medium and execute on one or more processors of the SST 401. The SST 401 has access and can communicate over one or more networks; and the networks can be wired, wireless, or a combination of wired and wireless.

The SST 401 includes an application 402 and a dispenser 403.

The SST 401 coupled to the dispenser 403 and programmed with the application 402.

In an embodiment, the SST 401 is the ATM 110 of the FIG. 1.

In an embodiment, the SST 401 is a kiosk.

The application 402 is programmed within memory and/or non-transitory computer-readable storage media on the SST 401.

The application 402 is operable to execute on the SST 401 and interact with the dispenser 403 and a remote host.

The dispenser 403 includes a mechanism for dispensing an item. In an embodiment, the item is currency. In an embodiment, the item is an electronic code(s) representing currency (of virtual currency, Bitcoin, Litecoin, etc.) and the dispensing mechanism to electronic media, such as a Secure Digital (SD) card, a Universal Serial Bus (USB) device, etc. In an embodiment, the item is a non-currency item representing a physical good(s) associated with the SST 401.

The dispenser 403 includes a secure microprocessor for housing cryptographic keys and processing cryptographic functions. The secure microprocessor is not accessible to the SST 401 and is not accessible to the application 402.

In an embodiment, the dispenser 403 is the dispenser 130 of the FIG. 1.

In an embodiment, the dispenser 403 is the dispenser validator of the FIG. 2.

The dispenser 403 is operable to receive from the application 402 a dispense command including a dispense amount and receive an authorization token from the application 402, which was issued from a host device (externally located from the SST 401). The dispense command having the dispense amount and the authorization token directly provided by the application 402 but indirectly provided and issued from the host device.

The dispenser 403 is also operable to validate the authorization token and dispense the dispense amount when the authorization token is validated. The application 402 and the SST 401 do not participate in the validation other than forwarding the dispense command and the authorization token received from the host device. Moreover, the application 402 is unable to validate the authorization token.

In an embodiment, the dispenser 403 is further operable to periodically exchange an encrypted shared key with the host device through the application 402. The application is unable to decrypt the encrypted shared key. A decrypted version of the encrypted shared key used by the host device to produce the authorization token, and a decrypted version of the encrypted shared key used by the dispenser to validate the authorization token.

In an embodiment, the encryption and decryption used by the dispenser 403 and the host device are achieved through asymmetric keys, such that the shared key is encrypted by the host device with a public key of the dispenser 403 and digitally signed with a private key of the host device; and the shared key is decrypted by the dispenser 403 using a private key of the dispenser 403 and a public key of the host device. The private keys never leave and are never transmitted from the host device or the dispenser 403 and not access is provided to the private keys from those devices. The host device only knows the public key of the dispenser 403 via a certificate (initially configured with the certificate) and the host device has no access to and is unaware of the dispenser's private key. Similarly, the dispenser 403 only knows the public key of the host device via a root certificate housed or manufactured on the dispenser 403 and the dispenser 403 has no access to and is unaware of the host device's private key. In this manner, the SST 401 and the application 402 of the SST 401 are unable to discover the encrypted shared key that is shared between the dispenser 403 and the host device.

One now appreciates how dispensing operations of SSTs can be securely achieved in a manner that if the SSTs were to be compromised, the dispense operation can invalidated independent of the compromised SST.

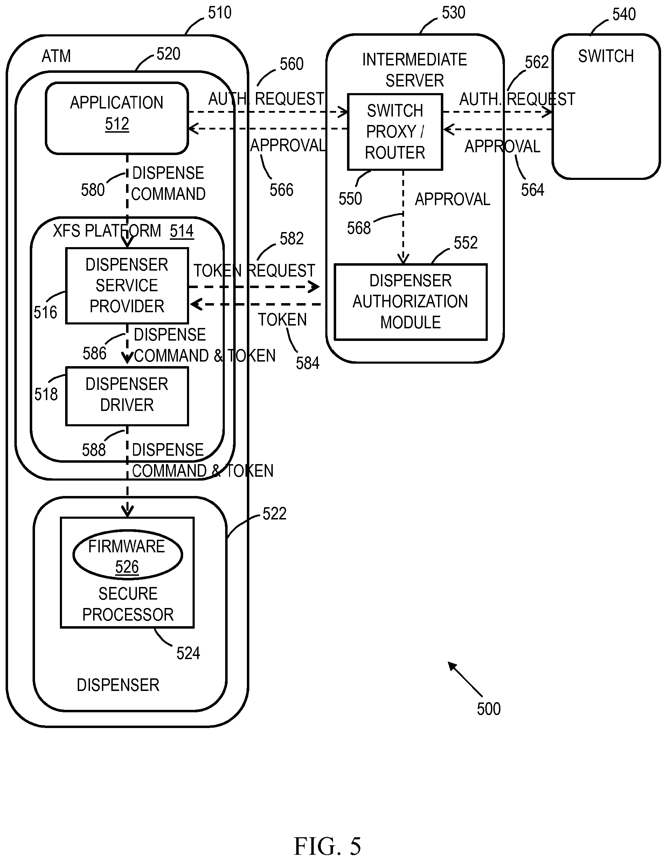

FIG. 5 is a diagram of an ATM network 500 for practicing end-to-end device authentication according to another example embodiment. This embodiment has the advantage of reduced network traffic and less impact on transaction times than some of the embodiments described above.

The ATM network 500 includes an ATM 510. The ATM 510 comprises the following software components: an application 512 that controls the operation of the ATM 510 and a driver suite 514. In this embodiment the ATM 510 implements the CEN XFS standard so the driver suite 514 comprises an XFS platform. The XFS platform 514 includes service providers (including a dispenser service provider 516) and device drivers (including dispenser driver 518). The dispenser service provider 516 is a modified version of a standard service provider, as will be described in more detail below.

The ATM 510 includes a PC core 520 (also called an ATM controller) on which the application 510 and XFS Manager 514 execute, and a plurality of devices (including a dispenser device 522) that are connected to the ATM controller 520. The dispenser device 522 includes a secure microprocessor 524 having secure memory in which firmware 526 executes. The dispenser firmware 526 controls the operation of the dispenser 522, such that cash can only be dispensed in response to instructions from the firmware 526.

The ATM network 500 also includes an intermediate server 530 and a switch (or interchange network) 530.

The application 512 communicates with the intermediate server 530 and with the XFS platform 514, and also provides a conventional graphical user interface for customers and service personnel who use the ATM 510. In this embodiment the application 512 may be a conventional, unmodified (or only modified in a very minor way), ATM application 512 implementing the CEN XFS standard.

The intermediate server 530 creates a token for each transaction authorized by the switch 540. The intermediate server 530 comprises: (i) a switch proxy 550 which interfaces with the ATM 510, and (ii) a dispense authorization component 552 that includes a secure cryptographic processor. The switch proxy 550 communicates with the application 512 and the switch 540, and relays transaction approval requests and responses therebetween. The switch proxy 550 also copies some approval responses (those in which the transaction is approved) to the dispense authorization component 552.

The switch 540 is responsible for authorising transaction requests received from the ATM 510 (via the intermediate server 520). The switch 540 is a conventional, unmodified switch that may be simultaneously coupled to, and simultaneously authorize transactions for, conventional ATMs.

During operation of the ATM network 500, a customer inserts his/her ATM card and PIN into the ATM 510 in a conventional manner. The ATM application 512 creates and sends a transaction authorisation request 560 for the switch 540 in a conventional manner, although the request includes an identifier for the ATM 510 and/or the dispenser 522 (if a conventional ATM application does not provide this then it would be modified to do so). This request 560 is actually routed to the intermediate server 530, and the switch proxy / router 550 relays the request 562 to the switch 540. The switch 540 authorizes the request 562 in a conventional manner and sends back a conventional transaction approval message 564 for the ATM 510. Again, the switch proxy / router 550 receives this message 564 and sends a conventional approval message 566 to the ATM application 512, but also concurrently sends an approval message 568 to the dispenser authorization module 552.

The dispenser authorization module 552 creates a validation token using this message 568. In a similar manner as for previous embodiments, the secure cryptographic processor in the dispenser authorization module 552 uses a key that is secret but shared with the dispenser 522 to create a token. The shared key is communicated securely in a similar manner as described with reference to FIG 1.

The token comprises a Method Authentication Code (MAC) message. The MAC message is created using the following components as inputs: the amount that has been authorized, the identifier for the dispenser 522 and/or ATM 510 that sent the transaction request, and a freshness value. The freshness value may comprise the current date and time as a defined sequence of bits; alternatively, the freshness value may comprise a serialized number, where the dispenser authorization module 552 increments the serialized number each time a token is created.

When the ATM application 512 receives the conventional approval message 566, the application 512 issues a dispense command for the approved amount to the XFS platform 514 (command 580).

When the dispenser service provider 516 receives this command 580, the dispenser service provider 516 sends a token request 582 to the dispenser authorization module 552, which responds by providing the token (the created MAC message) and the freshness value as a response message 584.

The dispenser service provider 516 then sends the response message 584 and a dispense command (collectively, message 586) to the dispenser driver 518.

The dispenser driver 518 sends a low-level (dispenser-specific) dispense command, together with the response message 584, (collectively, message 588) to the dispenser firmware 526.

The dispenser firmware 526 attempts to re-create the MAC code using the shared key operating on the following inputs: the amount to be dispensed (originally provided by the application 512), the identifier for the dispenser 522 and/or ATM 510 (from the response message 584), and the freshness value (from the response message 584). If the re-created MAC code matches the MAC code received in message 588 then message 588 is unchanged from the message originally sent by the dispenser authorization module 552.

The dispenser firmware 526 also checks that the dispenser 522 and/or ATM 510 identifier matches the identifier for the dispenser 522 and/or ATM 510. If the identifiers do not match, then the dispenser firmware 526 does not perform the transaction.

Furthermore, to ensure that this is not a replay attack (the same message sent on more than one occasion), the dispenser firmware 526 stores the freshness value from the most recent transaction that it executed (referred to herein as "the last freshness value"). The dispenser firmware 526 compares the freshness value in message 588 (referred to herein as "the current freshness value") with the last freshness value. If the current freshness value is not subsequent to (in other words, more recent than) the last freshness value then the dispenser firmware 526 does not perform the transaction.

It should be appreciated that this embodiment has the advantage that the switch does not need to be modified, and can be used with conventional ATMs simultaneously with ATMs according to this embodiment.

It should be appreciated that in other embodiments the intermediate server 530 may send a notification to the driver-level components (such as the dispenser service provider 516) rather than respond to a request therefrom.

It should be appreciated that other cryptographic techniques may be used instead of, or in addition to, those described above.

It should be appreciated that where software is described in a particular form (such as a component or module) this is merely to aid understanding and is not intended to limit how software that implements those functions may be architected or structured. For example, modules may be illustrated as separate modules, but may be implemented as homogenous code, as individual components, some, but not all of these modules may be combined, or the functions may be implemented in software structured in any other convenient manner.

Furthermore, although the software modules are illustrated as executing on one piece of hardware, the software may be distributed over multiple processors of a single device, or in any other convenient manner.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment.

## Claims

1. A method of operating a dispenser (130, 403, or 522) of a self-service terminal (110, 401, or 510) to validate a dispense command, the method comprising: obtaining, by the dispenser (130, 403, or 522), a token and a dispense command that are issued from a remote host (140 or 530) (step 210), wherein obtaining the token and the dispense command further includes receiving the token and the dispense command directly from a controller (520) to which the dispenser (130, 403, or 522) is coupled (step 211), wherein receiving the token and the dispense command further includes providing a nonce to the remote host (140 or 530) before obtaining the token, the nonce being used by the remote host (140 or 530) in generating the token (step 212), wherein the token is a Message Authentication Code, MAC, message generated by inputting a shared key shared between the dispenser and the remote host, the nonce, and a dispense amount associated with the dispense command into a first message authentication code function; and validating the token and the dispense command before processing the dispense command (step 220); wherein validating the token and the dispense command includes independently reproducing a version of the token by obtaining the shared key from a secure microprocessor (131 or 524) of the dispenser (130, 403 or 522), the secure microprocessor (131 or 524) being accessible only by the dispenser (130, 403 or 522), and using the shared key in reproducing the version (step 222) by processing a second message authentication code function on the secure microprocessor (131 or 524) using the shared key, the nonce, and the dispense amount associated with the dispense command (step 223) to generate a reproduced version of the MAC message, and comparing the reproduced version with the token to ascertain whether there is a match (step 221), thereby indicating that the token and the dispense command are valid and indicating that the dispense operation is to be performed.

2. The method of any preceding claim, wherein the method comprises the further step of sending an error message to the controller (520) that the dispenser (130, 403 or 522) is coupled to when the token and the dispense command are invalidated (step 231).

3. The method of any preceding claim, wherein validating further includes activating a currency dispensing mechanism to dispense a currency amount associated with the dispense command when the token and the dispense command are validated (step 232).

4. A self-service terminal (110, 401, or 510) comprising: a controller (520); an application (120, 402, or 512) executing on the controller (520) and operable to interact with a remote host (140 or 530); and **characterized by** a dispenser (130, 403, or 522) coupled to the controller (520) and operable to (i) receive a dispense command, including a dispense amount, issued by the remote host (140 or 530), (ii) receive an authorization token issued by the remote host (140 or 530), wherein the authorization token and the dispense command are received directly from the controller (520) to which the dispenser (130, 403, or 522) is coupled (step 211), and wherein the authorization token is generated using a nonce provided to the remote host (140 or 530), and wherein the authorization token is a Message Authentication Code, MAC, message generated by inputting a shared key shared between the dispenser and the remote host, the nonce, and the dispense amount into a first message authentication code function (iii) validate the authorization token and the dispense command, including independently reproducing a version of the token, including obtaining a shared key with the remote host (140 or 530) from a secure microprocessor (131 or 524) of the dispenser (130, 403 or 522), the secure microprocessor (131 or 524) being accessible only by the dispenser (130, 403 or 522), and using the shared key in reproducing the version, and processing a second message authentication code function on the secure microprocessor (131 or 524) using the shared key, the nonce, and the dispense amount to generate a reproduced version of the MAC message, and comparing the reproduced version with the authorization token to ascertain whether there is a match, and (iv) dispense the dispense amount only when the authorization token and the dispense command are validated.

5. The terminal of claim 4, wherein the application (120, 402, or 512) is operable to send the dispense command including a dispense amount to the dispenser (130, 403, or 522).

6. The terminal of claim 4 or 5, wherein the controller (520) includes a plurality of dispenser driver-level components (516, 518) for interfacing the application (120, 402, or 512) to dispenser firmware (526), and where one of the dispenser driver-level components (516, 518) receives the authorization token from the remote host (140 or 530) and conveys the authorization token to the dispenser (130, 403, or 522).

7. The terminal of claim 6, wherein the dispenser driver-level components (516, 518) comprise a dispenser service provider (516) and a dispenser driver (518).

8. The terminal of claim 7, wherein the dispenser service provider (516) communicates with the remote host (140 or 530).

9. The terminal of any of claims 4 to 8, wherein the dispenser (130, 403, or 522) is further operable to (v) periodically exchange an encrypted shared key with the remote host (140 or 530) via the controller (520), wherein the controller (520) is unable to decrypt the encrypted shared key, and a decrypted version of the encrypted shared key is used by the remote host (140 or 530) to produce the authorization token, and a decrypted version of the encrypted shared key is used by the dispenser (130, 403, or 522) to validate the authorization token.

10. The terminal of any of claims 4 to 9, wherein the dispenser (130, 403, or 522) comprises a currency dispenser.

## Patentansprüche

1. Verfahren zum Betreiben einer Ausgabe (130, 403 oder 522) eines Selbstbedienungsterminals (110, 401 oder 510), um einen Ausgabebefehl zu validieren, das Verfahren umfassend: Erhalten, durch die Ausgabe (130, 403 oder 522), eines Tokens und eines Ausgabebefehls, die von einem Remote-Host (140 oder 530) ausgegeben werden (Schritt 210), wobei das Erhalten des Tokens und des Ausgabebefehls ferner das direkte Empfangen des Tokens und des Ausgabebefehls von einer Steuerung (520) beinhaltet, mit der die Ausgabe (130, 403 oder 522) gekoppelt ist (Schritt 211), wobei das Empfangen des Tokens und des Ausgabebefehls ferner das Bereitstellen einer Nonce für den Remote-Host (140 oder 530) vor Erhalten des Tokens beinhaltet, wobei die Nonce vom Remote-Host (140 oder 530) beim Erzeugen des Tokens verwendet wird (Schritt 212), wobei das Token eine Message Authentication Code-(MAC-)Nachricht ist, die durch Eingeben eines gemeinsamen Schlüssels, der zwischen der Ausgabe und dem Remote-Host gemeinsam genutzt wird, der Nonce, und einem Ausgabebetrag, der mit dem Ausgabebefehl in eine erste Message Authentication Code-Funktion assoziiert ist, erzeugt wird; und Validieren des Tokens und des Ausgabebefehls vor Verarbeiten des Ausgabebefehls (Schritt 220); wobei das Validieren des Tokens und des Ausgabebefehls das unabhängige Reproduzieren einer Version des Tokens durch Erhalten des gemeinsamen Schlüssels von einem sicheren Mikroprozessor (131 oder 524) der Ausgabe (130, 403 oder 522) beinhaltet, wobei der sichere Mikroprozessor (131 oder 524) nur für die Ausgabe (130, 403 oder 522) zugänglich ist, und Verwenden des gemeinsamen Schlüssels beim Reproduzieren der Version (Schritt 222) durch Verarbeiten einer zweiten Message Authentication Code-Funktion auf dem sicheren Mikroprozessor (131 oder 524) unter Verwendung des gemeinsamen Schlüssels, der mit dem Ausgabebefehl assoziiert ist, der Nonce und des Ausgabebetrags, (Schritt 223), um eine reproduzierte Version der MAC-Nachricht zu erzeugen, und Vergleichen der reproduzierten Version mit dem Token, um festzustellen, ob eine Übereinstimmung vorliegt (Schritt 221), wodurch angegeben wird, dass das Token und der Ausgabebefehl gültig sind, und angegeben wird, dass der Ausgabevorgang durchgeführt werden soll.

2. Verfahren nach einem der vorhergehenden Ansprüche, wobei das Verfahren den weiteren Schritt des Sendens einer Fehlermeldung an die Steuerung (520) umfasst, mit der die Ausgabe (130, 403 oder 522) gekoppelt ist, wenn das Token und der Ausgabebefehl für ungültig erklärt werden (Schritt 231).

3. Verfahren nach einem der vorhergehenden Ansprüche, wobei das Validieren ferner das Aktivieren eines Geldausgabemechanismus zum Ausgeben eines mit dem Ausgabebefehl assoziierten Geldbetrags umfasst, wenn das Token und der Ausgabebefehl validiert werden (Schritt 232).

4. Selbstbedienungsterminal (110, 401 oder 510), umfassend: eine Steuerung (520); eine Anwendung (120, 402 oder 512), die auf der Steuerung (520) ausgeführt wird und betreibbar ist, um mit einem Remote-Host (140 oder 530) zu interagieren; und **gekennzeichnet durch** eine Ausgabe (130, 403 oder 522), die mit der Steuerung (520) gekoppelt ist und betreibbar ist, um (i) einen Ausgabebefehl zu empfangen, einschließlich eines Ausgabebetrags, der vom Remote-Host (140 oder 530) ausgegeben wird, (ii) ein Autorisierungstoken zu empfangen, das vom Remote-Host (140 oder 530) ausgegeben wird, wobei das Autorisierungstoken und der Ausgabebefehl direkt von der Steuerung (520) empfangen werden, mit der die Ausgabe (130, 403 oder 522) gekoppelt ist (Schritt 211), und wobei das Autorisierungstoken unter Verwendung einer Nonce erzeugt wird, die dem Remote-Host (140 oder 530) bereitgestellt wird, und wobei das Autorisierungstoken eine Message Authentication Code-(MAC)-Nachricht ist die durch Eingabe eines gemeinsamen Schlüssels, der zwischen der Ausgabe und dem Remote-Host gemeinsam genutzt wird, der Nonce und dem Ausgabebetrag in eine erste Message Authentication Code-Funktion erzeugt wird, (iii) das Autorisierungstoken und den Ausgabebefehl zu validieren, einschließlich das unabhängige Reproduzieren einer Version des Tokens, einschließlich das Erhalten eines gemeinsam genutzten Schlüssels mit dem Remote-Host (140 oder 530) von einem sicheren Mikroprozessor (131 oder 524) der Ausgabe (130, 403 oder 522), wobei der sichere Mikroprozessor (131 oder 524) nur für die Ausgabe (130, 403 oder 522) zugänglich ist, und Verwenden des gemeinsamen Schlüssels beim Reproduzieren der Version, und Verarbeiten einer zweiten Message Authentication Code-Funktion auf dem sicheren Mikroprozessor (131 oder 524) unter Verwendung des gemeinsamen Schlüssels, der Nonce und des Ausgabebetrags, um eine reproduzierte Version der MAC-Nachricht zu erzeugen, und Vergleichen der reproduzierten Version mit dem Autorisierungstoken, um zu festzustellen, ob eine Übereinstimmung vorliegt, und (iv) den Ausgabebetrag nur dann auszugeben, wenn das Autorisierungstoken und der Ausgabebefehl validiert sind.

5. Terminal nach Anspruch 4, wobei die Anwendung (120, 402 oder 512) betreibbar ist, um den Ausgabebefehl einschließlich einer Ausgabemenge an die Ausgabevorrichtung (130, 403 oder 522) zu senden.

6. Terminal nach Anspruch 4 oder 5, wobei die Steuerung (520) eine Vielzahl von Ausgabe-Treiberstufenkomponenten (516, 518) zum Verbinden der Anwendung (120, 402 oder 512) mit der Ausgabe-Firmware (526) beinhaltet, und wobei eine der Ausgabe-Treiberstufenkomponenten (516, 518) das Autorisierungstoken vom Remote-Host (140 oder 530) empfängt und das Autorisierungstoken zur Ausgabe (130, 403 oder 522) überträgt.

7. Terminal nach Anspruch 6, wobei die Ausgabe-Treiberstufenkomponenten (516, 518) einen Ausgabe-Dienstanbieter (516) und einen Ausgabe-Treiber (518) umfassen.

8. Terminal nach Anspruch 7, wobei der Ausgabe-Dienstanbieter (516) mit dem Remote-Host (140 oder 530) kommuniziert.

9. Terminal nach einem der Ansprüche 4 bis 8, wobei die Ausgabe (130, 403 oder 522) ferner betreibbar ist, um (v) periodisch einen verschlüsselten gemeinsam genutzten Schlüssel mit dem Remote Host (140 oder 530) über die Steuerung (520) auszutauschen, wobei die Steuerung (520) nicht in der Lage ist, den verschlüsselten gemeinsam genutzten Schlüssel zu entschlüsseln, und eine entschlüsselte Version des verschlüsselten gemeinsamen Schlüssels vom Remote-Host (140 oder 530) verwendet wird, um das Autorisierungstoken zu erzeugen, und eine entschlüsselte Version des verschlüsselten gemeinsamen Schlüssels von der Ausgabe (130, 403 oder 522) verwendet wird, um das Autorisierungstoken zu validieren.

10. Terminal nach einem der Ansprüche 4 bis 9, wobei die Ausgabe (130, 403 oder 522) eine Geldausgabe umfasst.

## Revendications

1. Procédé de fonctionnement d'un distributeur (130, 403, ou 522) d'un terminal en libre-service (110, 401, ou 510) pour valider un ordre de distribution, le procédé comprenant : l'obtention, par le distributeur (130, 403, ou 522), d'un jeton et d'un ordre de distribution qui sont émis par un hôte distant (140 ou 530) (étape 210), dans lequel l'obtention du jeton et de l'ordre de distribution comporte en outre la réception du jeton et de l'ordre de distribution directement à partir d'un dispositif de commande (520) auquel le distributeur (130, 403, ou 522) est couplé (étape 211), dans lequel la réception du jeton et de l'ordre de distribution comporte en outre la fourniture d'un nonce à l'hôte distant (140 ou 530) avant l'obtention du jeton, le nonce étant utilisé par l'hôte distant (140 ou 530) dans la génération du jeton (étape 212), dans lequel le jeton est un message de code d'authentification de message, MAC, généré par la fourniture en entrée d'une clé partagée qui est partagée entre le distributeur et l'hôte distant, du nonce, et d'un montant de distribution associé à l'ordre de distribution à une première fonction de code d'authentification de message ; et la validation du jeton et de l'ordre de distribution avant de traiter l'ordre de distribution (étape 220) ; dans lequel la validation du jeton et de l'ordre de distribution comporte la reproduction indépendante d'une version du jeton par l'obtention de la clé partagée à partir d'un microprocesseur sécurisé (131 ou 524) du distributeur (130, 403 ou 522), le microprocesseur sécurisé (131 ou 524) étant accessible uniquement par le distributeur (130, 403 ou 522), et l'utilisation de la clé partagée dans la reproduction de la version (étape 222) par traitement d'une deuxième fonction de code d'authentification de message sur le microprocesseur sécurisé (131 ou 524) à l'aide de la clé partagée, du nonce, et du montant de distribution associé à l'ordre de distribution (étape 223) pour générer une version reproduite du message MAC, et la comparaison de la version reproduite avec le jeton pour confirmer s'il existe une concordance (étape 221), indiquant ainsi que le jeton et l'ordre de distribution sont valides et indiquant que l'opération de distribution doit être réalisée.

2. Procédé selon l'une quelconque des revendications précédentes, dans lequel le procédé comprend l'étape supplémentaire consistant à envoyer un message d'erreur au dispositif de commande (520) auquel le distributeur (130, 403 ou 522) est couplé lorsque le jeton et l'ordre de distribution sont invalidés (étape 231).

3. Procédé selon l'une quelconque des revendications précédentes, dans lequel la validation comporte en outre l'activation d'un mécanisme de distribution de devises pour distribuer un montant de devises associé à l'ordre de distribution lorsque le jeton et l'ordre de distribution sont validés (étape 232).

4. Terminal en libre-service (110, 401, ou 510) comprenant : un dispositif de commande (520) ; une application (120, 402, ou 512) en exécution sur le dispositif de commande (520) et pouvant fonctionner pour interagir avec un hôte distant (140 ou 530) ; et **caractérisé par** un distributeur (130, 403, ou 522) couplé au dispositif de commande (520) et pouvant fonctionner pour (i) recevoir un ordre de distribution, comportant un montant de distribution, émis par l'hôte distant (140 ou 530), (ii) recevoir un jeton d'autorisation émis par l'hôte distant (140 ou 530), dans lequel le jeton d'autorisation et l'ordre de distribution sont reçus directement à partir du dispositif de commande (520) auquel le distributeur (130, 403, ou 522) est couplé (étape 211), et dans lequel le jeton d'autorisation est généré à l'aide d'un nonce fourni à l'hôte distant (140 ou 530), et dans lequel le jeton d'autorisation est un message de code d'authentification de message, MAC, généré par fourniture en entrée d'une clé partagée qui est partagée entre le distributeur et l'hôte distant, du nonce, et du montant de distribution à une première fonction de code d'authentification de message (iii) valider le jeton d'autorisation et l'ordre de distribution, comportant la reproduction indépendante d'une version du jeton, comportant l'obtention d'une clé partagée avec l'hôte distant (140 ou 530) à partir d'un microprocesseur sécurisé (131 ou 524) du distributeur (130, 403 ou 522), le microprocesseur sécurisé (131 ou 524) étant accessible uniquement par le distributeur (130, 403 ou 522), et l'utilisation de la clé partagée dans la reproduction de la version, et le traitement d'une deuxième fonction de code d'authentification de message sur le microprocesseur sécurisé (131 ou 524) à l'aide de la clé partagée, du nonce, et du montant de distribution pour générer une version reproduite du message MAC, et la comparaison de la version reproduite avec le jeton d'autorisation pour confirmer qu'il existe une concordance, et (iv) distribuer le montant de distribution uniquement lorsque le jeton d'autorisation et l'ordre de distribution sont validés.

5. Terminal selon la revendication 4, dans lequel l'application (120, 402 ou 512) peut être mise en œuvre pour envoyer l'ordre de distribution comportant un montant de distribution au distributeur (130, 403 ou 522).

6. Terminal selon la revendication 4 ou 5, dans lequel le dispositif de commande (520) comporte une pluralité de composants (516, 518) au niveau de pilote de distributeur pour l'interfaçage de l'application (120, 402, ou 512) avec le micrologiciel (526) de distributeur, et dans lequel l'un des composants (516, 518) au niveau de pilote de distributeur reçoit le jeton d'autorisation à partir de l'hôte distant (140 ou 530) et achemine le jeton d'autorisation jusqu'au distributeur (130, 403 ou 522).

7. Terminal selon la revendication 6, dans lequel les composants (516, 518) au niveau de pilote de distributeur comprennent un fournisseur de service (516) de distributeur et un pilote (518) de distributeur.

8. Terminal selon la revendication 7, dans lequel le fournisseur de service (516) de distributeur communique avec l'hôte distant (140 ou 530).

9. Terminal selon l'une quelconque des revendications 4 à 8, dans lequel le distributeur (130, 403, ou 522) est en outre capable de fonctionner pour (v) échanger périodiquement une clé partagée chiffrée avec l'hôte distant (140 ou 530) via le dispositif de commande (520), dans lequel le dispositif de commande (520) est incapable de déchiffrer la clé partagée chiffrée, et une version déchiffrée de la clé partagée chiffrée est utilisée par l'hôte distant (140 ou 530) pour produire le jeton d'autorisation, et une version déchiffrée de la clé partagée chiffrée est utilisée par le distributeur (130, 403, ou 522) pour valider le jeton d'autorisation.

10. Terminal selon l'une quelconque des revendications 4 à 9, dans lequel le distributeur (130, 403 ou 522) comprend un distributeur de devises.
